# EUROPEAN PATENT SPECIFICATION

(11) **EP 0 559 462 B1**
(45) Date of publication and mention of the grant of the patent: **26.04.2000**
(21) Application number: 93301631.3
(22) Date of filing: 04.03.1993
(51) Int. Cl.: C08L 95/00

(54) **New polymer-modified, oxidized asphalt compositions and methods of preparation**
Neuer mit Kunststoff modifizierter, oxidierter Asphalt und Methoden zu seiner Herstellung
Nouvelles compositions d'asphalte oxydé et modifié avec un polymère et procédé de préparation

(30) Priority: 05.03.1992 US 846366
(43) Date of publication of application: 08.09.1993
(73) Proprietor: EXXON RESEARCH AND ENGINEERING COMPANY, Florham Park, New Jersey 07932-0390 (US)
(72) Inventor: Gorbaty, Martin Leo, Westfield, New Jersey (US); Nahas, Nicholas Charles, Chatham, New Jersey (US)
(74) Representative: Fletcher Watts, Susan J.

(56) References cited:
- EP-A- 0 441 285
- WO-A-86/06736
- US-A- 4 371 641
- US-A- 4 544 690
- DATABASE WPI Week 7513, Derwent Publications Ltd., London, GB; AN 75-22059W

## Description

The present invention relates to asphaltic compositions having viscoelastic properties that are suitable for use as binders in dense graded and open graded hot mix asphalt pavement. The compositions comprise blends of asphalt or bitumen and synthetic polymers which are stable in storage between the time of preparation and the time of use in hot mix pavement. The present invention also relates to methods of preparing and methods of using the compositions and the products produced by the process of the present invention. The terms asphalt and bitumen are used interchangeably herein.

Asphalt is a bituminous material remaining after, or prepared from, the distillation of crude oil. Typically, asphalt is derived from the bottoms of a vacuum distillation tower and has an atmospheric equivalent boiling point of generally at least 350°C. Because it is hydrophobic and has good adhesiveness and weatherability, asphalt can be used as an adhesive or binder component of road paving materials. When so used, asphalt is normally mixed with aggregate (i.e., rock), typically in a ratio of about 5 wt.% asphalt to 95 wt.% aggregate.

Asphalt, however, has certain physical properties that vary widely with changes in temperature. For this reason, polymers often are added to asphalt to extend the range of its physical properties. Polymers can reduce the tendency of the asphalt to creep and rut in warm weather by increasing its high temperature viscoelastic stiffness; typical paving grade asphalts have softening points below 50°C, while softening points greater than 55°C are desired for resistance to creep in hot weather; and polymers can minimize cracking and stripping in cold weather by improving the asphalt's low temperature viscoelastic properties.

However, not all asphalts and polymers form compatible mixtures having storage stability. "Storage stability" is defined as the formation of a continuous phase or two continuous phases that do not separate on standing for a specified period of time, usually 3-5 days, at a specified temperature, usually 160°C. The storage stability of polymer modified asphalt is greatly affected by the compatibility of the asphalt with the particular polymer. Incompatible and partially compatible mixtures easily undergo phase separation.

Furthermore, some polymer modified asphalts are suitable for roofing applications but cannot be used in hot mix paving applications where the blend must be sufficiently fluid at mixing temperature to adequately coat the aggregate particles. For example, an asphalt binder for dense graded hot mix paving should have a viscosity at 135°C between 150 and 2000 cP, and a binder for open graded hot mix should have a viscosity at 135°C between 3000 and 8000 cP.

Various methods have been suggested for making polymer-modified asphalt compositions that are sufficiently compatible to be acceptably storage stable and that also have viscosities and softening points in the range required for a particular type of application. Some, for example, rely on selection of the appropriate polymer and other additives and require a specific sequence of blending and reaction steps to effect the final properties of the asphalt-polymer mixture (see, for example, U.S. Patent No. 4,600,635 for use of a bitumen-based adhesive composition comprising bitumen, oil, and an ionomeric elastomer (such as sulfonated, carboxylated or phosphonated EPDM or butyl rubber) in less than 15% weight, preferably 3%-8%, that is neutralized by metal cations; British Patent No. 1,534,183 discloses inter alia use of a metal alcoholate and the addition of from 5% to 95% wt. of an ethylene/vinyl ester copolymer and bitumen partially crosslinked by means of -O-M-O-, -O-B-O- or -O-CRR'-O-bridges; or U.S. 4,882,373 for acid modification of asphalt with subsequent contact with an oxygen-containing gas, and mixing with a thermoplastic elastomer, and an unsaturated functional monomer.)

EP-A-0 441 285 describes compositions comprising asphalt and an aqueous microemulsion of a sulfonated elastomer. The compositions are stated to be more stable than those prepared using emulsifiers. The aqueous phase may be substantially removed to form a mixture of the sulfonated elastomer and asphalt. The asphalt may be employed in sulfonated form dispersed as a microemulsion in water. The elastomer is suitably a block copolymer, which is normally hydrogenated if unsaturation is present prior to its sulfonation. The sulfonated elastomer may be employed in neutralized form.

European Patent No. 38,721 (U.S. Patent No. 4,371,641) teaches that a polymer, preferably an unsaturated elastomer, e.g., EPDM or butyl rubber, or a thermoplastic polymer (from 5-25 wt.%) and an appropriate filler can be added to airblown asphalt to make it suitable for use as a roofing material by increasing the asphalt's stability towards oxidation and decreasing its sensitivity to ultraviolet radiation. The thermoplastic or elastomeric polymer must contain anionic groups such as carboxylate, phosphonate or, preferably, sulfonate groups which can be neutralized by addition of a salt of a carboxylic acid, preferably a metal acetate, more preferably zinc acetate. Applicants have found that the weight percents of polymer specified in this disclosure produce blends that are too viscous to coat the aggregate in hot mix paving materials.

Accordingly, none of the foregoing references teaches nor suggests the asphaltic compositions having the storage stability and viscoelastic properties over a wide range of temperatures required to produce a superior binder for dense graded and open graded hot mix asphalt for road paving applications that is disclosed by the applicants, nor do they teach nor suggest the process of preparing or using applicants' composition.

In one aspect of the present invention, there is provided an asphaltic composition having improved storage stability, which comprises a base-neutralized mixture of (a) an oxidized asphalt, (b) a sulfonated polymer selected from (i) sulfonated EPDM and (ii) sulfonated non-hydrogenated coplymers being styrene-butadiene linear diblock, styrene-butadiene-styrene linear triblock and styrene-butadiene-styrene radial triblock copolymers; and, optionally, (c) a flux; wherein the composition has a softening point greater than 55°C and a viscosity in the range of from 0.15 to 2.0 Pa.s (150 cP to 2000 cP) or from 3.0 to 8.0 Pa.s (3000 cP to 8000 cP), measured at 135°C.

The asphaltic compositions of the present invention are storage stable and have viscoelastic properties over a wide range of temperatures that make them suitable for use as superior binders for dense-graded and open-graded hot mix asphalt for road paving applications. The compositions having softening points greater than 55°C and viscosities measured at 135°C in a range from 0.15 to 2.0 Pa.s (150 to 2000 cP) are suitable for dense-graded pavement; and those of from 3.0 to 8.0 Pa.s (3000 to 8000 cP) are suitable for open-graded pavement.

The polymer is preferably present in an amount of:
(a) less than 4 wt.%, preferably from 2 to 3 wt.%, of total composition for the sulfonated EPDM, or
(b) from 2 to 7 wt.%, suitably 3 to 5 wt.%, of total composition for the said sulfonated styrene butadiene polymers.

The preferred cations of the basic neutralizing agent have a valence from +1 to +3. More particularly, the neutralizing agent may be selected from the group consisting of amines, ammonia, and bases that contain cations selected from the group consisting of Groups IA, IIA, IIIA and Group B elements and mixtures thereof. The term "EPDM" is used as defined in ASTM D-1418; and "sulfonated styrene-butadiene" means sulfonated styrene-butadiene linear diblock and sulfonated styrene-butadiene-styrene linear and radial triblock copolymers, which copolymers are not hydrogenated. This invention also relates to a method for making and using the compositions, and includes the products produced by the process disclosed herein. More specifically, the asphaltic compositions have improved phase compatibility between a neutral blend of oxidized asphalt and acid functionalized polymer and are storage stable. Oxidation is accomplished by means of airblowing.

In order to be suitable as a binder in open graded or dense graded pavement, a polymer-modified asphalt must have certain characteristics. It must be liquid-like on application, but harden on cooling, be able to resist rutting, cracking and stripping and should be storage stable as a hot fluid. In order to achieve the necessary liquid-like properties, the polymer-modified asphalt must have a lower range of viscosities and softening points than is needed in certain other applications such as roofing materials. Viscosities in the range of from 0.15 to 2.0 Pa.s (150 to 2000 cP) at 135°C for dense-graded, and from 3.0 to 8.0 Pa.s (3000 to 8000 cP) at 135°C for open-graded pavement binders are required in the compositions of the present invention. Softening points in the range of greater than 55°C to 65°C as a binder for dense-graded and from 60°C to 75°C as a binder for open-graded pavement are preferred. While addition of polymers can impart the needed viscoelastic properties to the material, the type of polymer and the manner in which the asphalt and polymer are modified also can influence the compatibility and storage stability of the resulting asphaltic composition. It is economically very desirable that the asphaltic composition be storage stable if it is to be used as a binder in road paving materials.

In another aspect of the invention, there is provided a method of preparing the aforedefined composition of the invention, wherein the oxidized asphalt, the sulfonated polymer and basic neutralizing agent are combined in situ at a temperature from above 140°C to 250°C. Alternatively, the sulfonated polymer is first neutralized with the basic neutralizing agent and then combined with the oxidized asphalt at a temperature of from above 140°C to 250°C. In the case of sulfonated polymers, sulfonation should be accomplished prior to combining with the oxidized asphalt and should preferably be at a level of less than about 15 mole percent, and may be performed by any means known to one skilled in the art. For example, sulfonation may be accomplished using acetyl sulfate or, more preferably, sulfuric acid. Thereafter the sulfonated polymers are neutralized.

The asphalts used in the present invention may be obtained from a variety of petroleum residua and may be classified by their penetration (measured according to Standard Specification ASTM D-5). Typically, the asphalt will have a nominal atmospheric boiling point at least 350°C and more typically above 440°C. In the process of the present invention, the asphalt is oxidized by airblowing in any manner known to one skilled in the art. Oxidation is carried out at a temperature ranging from about 180°C to 300°C; more preferably, from about 200°C to about 250°C for about 3 hours to about 12 hours for commercial processes. Generally, the procedure followed is to oxidize the asphalt to a pre-selected softening point, usually greater than 100°C, and a relatively high viscosity, then blend in flux, which may be the original asphalt or other asphaltic material, to decrease the viscosity into the target range desired. Selection of the desired final viscosity is generally based on experience and is within the skill of a routineer in the art, given the ranges disclosed in the present invention. The term "oxidized asphalt" in this disclosure and in the claims of this invention means any blend of oxidized and unoxidized asphalts so prepared.

In the process of making the novel asphaltic compositions, the oxidized asphalt and acid functionalized polymer mixture may be combined using any number of methods known to one skilled in the art. These may include dissolution with stirring in a suitable solvent such as dichloroethane for the asphalt and toluene for the polymer, or heating the oxidized asphalt to about 140°C to 170°C and thereafter adding the polymer in situ in portions with stirring or agitation, the latter preferably using a high shear mixing device. The method used will influence the amount of time needed to combine the oxidized asphalt and polymer, but in any event should be sufficient to distribute the polymer throughout the asphalt. Times may range from 1/2 to 24 hours, according to the method used.

The basic neutralizing agent contains cations having a valence from +1 to +3 specifically +1, +2 and +3, and may be selected from the group consisting of ammonia, amines, bases that contain cations selected from the group consisting of Groups IA, IIA, IIIA, and Group B of the Periodic Table and mixtures thereof. The preferred basic neutralizing agent is one that contains one or more monovalent or divalent cations, preferably divalent cations. These may preferably be Zn⁺², Ca⁺², Ba⁺², Mg⁺² and mixtures thereof, or more preferably Zn⁺² and Ca⁺². Suitable compounds containing such cations are, for example, zinc acetate, zinc oxide or calcium oxide, more preferably calcium oxide. The basic neutralizing agent may be contained in a suitable solvent, such as water/methanol before adding to the oxidized asphalt-polymer mixture, or may be added in situ, for example, in powdered or other undissolved form. The order of neutralization is not important. Thus, for example, the polymer may be neutralized and then combined with the oxidized asphalt suitably at 140 to 250°C; or the oxidized asphalt and sulfonated polymer may be combined and then neutralized, suitably at 140 to 250°C. It is necessary that sufficient neutralizing agent be added to neutralize the oxidized asphalt and acid groups on the polymer. Generally this will require a stoichiometric amount or, preferably a slight excess of neutralizing agent.

It is possible to adjust the softening point and viscosity of the asphaltic composition by varying the amount of oxidized asphalt and polymer in the composition. However, it is a requirement of the present invention that the resulting asphalt-polymer compositions have a viscosity in the range from 0.15 to 2.0 Pa.s (150 to 2000 cP) for binders for dense-graded pavement and from 3.0 to 8.0 Pa.s (3000 to 8000 cP) for binders for open graded asphalt pavement, measured at 135°C. Hence, the weight percent of polymer in comparison to the weight percent of the total composition must be adjusted accordingly. At all times the amount of polymer will very preferably be less than 7 wt.%. However, in the case of sulfonated EPDM the weight percent of polymer in the composition is very preferably less than 4 wt.%, preferably from 2 to 3 wt.%; in the case of sulfonated styrene butadiene the weight percent is very preferably from 2 to 7 wt.%, preferably from 3 wt.% to 5 wt.%. It is at these amounts that the asphaltic compositions possess the necessary viscoelastic character to enable their preferred use as a binder in open graded and dense graded road paving materials, while showing the storage stability characteristic of the materials of this invention.

It has been found that, compared with untreated asphalt or functionalized airblown asphalt alone, the compositions of the present invention form compatible blends which remain storage stable after holding for 4 days at 160°C, have improved viscoelastic properties and softening points and have viscosities that are within the targets required for the particular binders.

In the present invention, softening point was used as a measure of compatibility and storage stability. If the top third and bottom third of each sample stored at 160°C for 4 days showed softening points within about a 4°C variation, the asphalt and polymer were judged compatible. However, in order to supplement the softening point data optical micrographs were taken of the top and bottom segments of the asphaltic compositions to verify phase compatibility.

The invention is illustrated by reference to the following examples, which are not intended to limit the scope of the invention.

### Example 0 :

Oxidation was accomplished by heating the asphalt (asphalt is a Billings asphalt of penetration grade 120/150) to 200°C with stirring for 2 hours and by passing air through the asphalt with an inlet at the bottom of the flask.

### Example 1

An unoxidized asphalt (Baytown AC-10) was blended with a commercially prepared airblown coating grade of asphalt ("coating grade" as used herein means highly oxidized asphalt having a softening point of at least 205°F (96°C)). Coating grade was prepared from Tia Juana Medium residuum. In this example, Zn-sulfonated EPDM was used to compare an air oxidized asphalt prepared as in Example 0, with an asphalt prepared by blending an unoxidized asphalt (Sample A) with an airblown coating grade. In this example, 20 wt.% of the coating grade material was blended at 160°C with 80 wt.% of unoxidized asphalt.

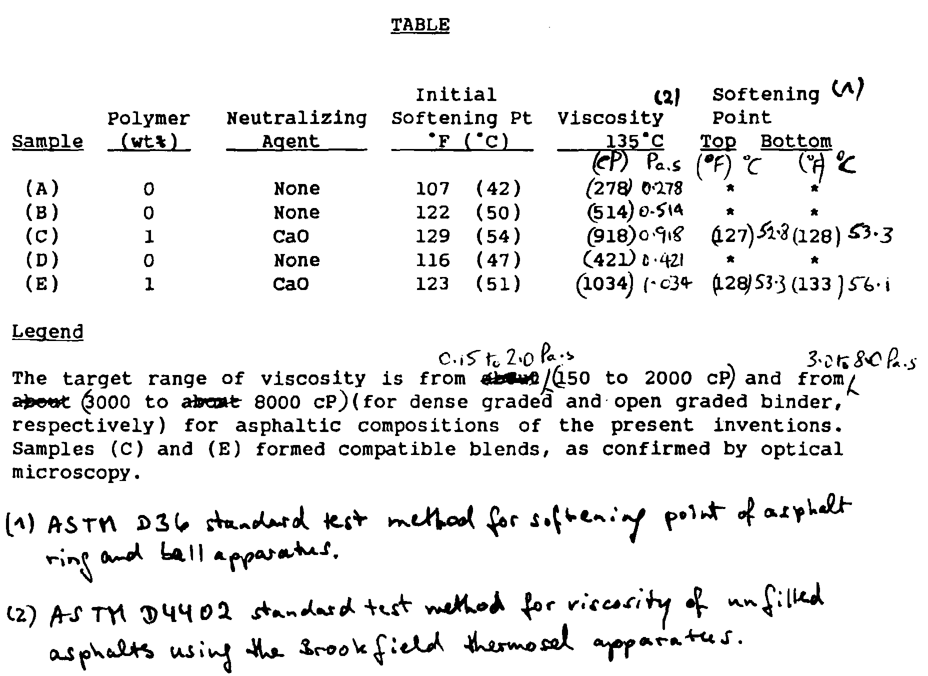

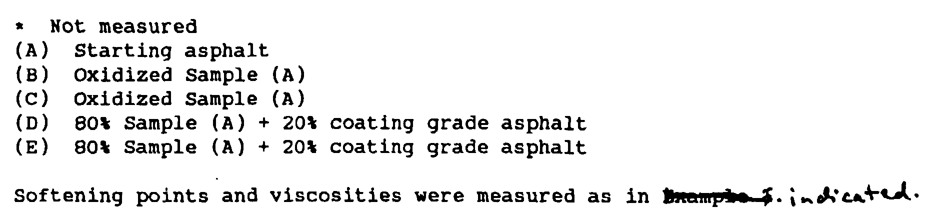

### Example 2

A Zn-sulfonated EPDM (the polymer was separately neutralized) was mixed with a coating grade asphalt at 160°C (320°F). Proper ties of this blend (Sample C) are shown in the table below and are seen to be too high in softening point and viscosity to be useful in asphalt binder applications. Coating grade was prepared from Tia Juana Medium residuum. Unoxidized asphalt (Baytown AC-5) was blended back to the coating grade-polymer blend to adjust the properties into the target range. Data in the table below indicate that this is effective. All blending was done at 160°C (320°F) although temperatures below that can be used in providing the blends are low enough in viscosity to allow good mixing.

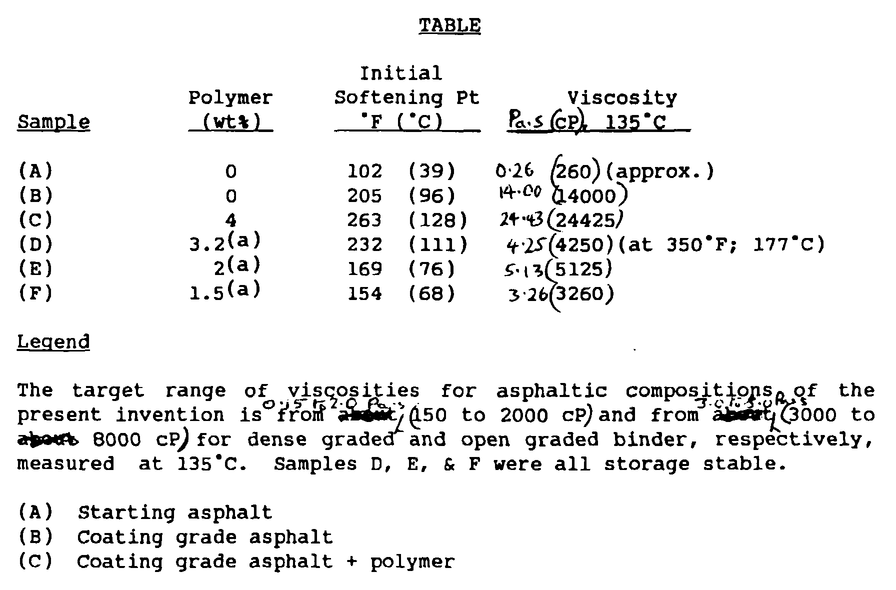

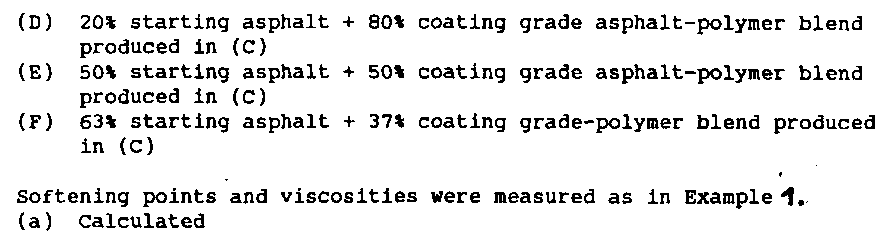

### Example 3

A feedstock was prepared by blending 20 wt.% of an airblown coating grade asphalt (softening point 195°F; viscosity 12.58 Pa.s (12,580 cP) at 275°F (135°C) with 80% of an unoxidized asphalt (AC-3) (softening point 61°F (16°C); viscosity 70 cP at 275°F (135°C). Coating grade was prepared from Tia Juana Medium residuum. Unoxidized asphalt was prepared from a blend of naphthenic crude oil residua. The resulting 80/20 blend had a softening point of 117°F (47°C) and a viscosity of 0.388 Pa.s (388 cP) at 275°F (135°C). To 376.8g of this 80/20 blend, heated at 320°F (160°C), 11.3g of a sulfonated zinc neutralized styrene-butadiene-styrene triblock radial copolymer was added, and the mixture was stirred for 2 hours. The resulting polymer-asphalt blend had a softening point of 153°F (67°C) and a viscosity of 1.042 Pa.s (1042 cP) at 275°F (135°C). It was storage stable after 4 days at 160°C, having a bottom and top softening point of 164°F (73°C) and 165°F (74°C), respectively. The storage stability was also confirmed by optical microscopy. In another vessel, 338g of the 80/20 blend was heated to 320°F (160°C) and 10.15g of a sulfonated zinc neutralized styrene-butadiene diblock copolymer was added, and the mixture stirred for 2 hours. The resulting polymer modified asphalt had a softening point of 135°F (57°C) and a viscosity of 1.074 Pa.s (1074 cP) at 275°F (135°C). It was storage stable after 4 days at 160°C (both top and bottom samples had softening points of 140°F (60°C), and the storage stability was confirmed by optical microscopy. Other blends were made with the same 80/20 asphalt feed and the same amounts of unsulfonated polymers. These blends were not storage stable, having bottom and top softening points of 54.4°C of (130°F) and 100°C (212°F), respectively, for the SBS blend and 60.6°C (141°F) and 53.9°C (129°F), respectively, for the SB blend.

Similar experiments were carried out using an air oxidized Baytown AC-10 asphalt prepared as described in Example 0. Data are shown in the table below. Softening points and viscosities were measured as in Example 1.

**TABLE**

| Sample | Polymer | Softening Pt. °F (°C) | Viscosity 135°C | Softening Pt, | |
|---|---|---|---|---|---|
| | | | (cP) Pa.s | Bottom (°F) °C | Top (°F) °C |
| (AC-10) Bitumen | None | 107 (42) | (278) 0.278 | - | - |
| Air Oxidized | None | 127 (53) | (638) 0.638 | - | - |
| Air Oxidized | 2% Zn Sulfo-SBS | 128 (53) | (832) 0.832 | (126) 52.2 | (127) 52.8 |
| Air Oxidized | 2% Zn Sulfo-SB | 144 (62) | (1806) 1.806 | (142) 61.1 | (142) 61.1 |
| Air Oxidized | 4% Zn Sulfo-SB | 153 (67) | (3610) 3.610 | (154) 67.8 | (154) 67.8 |

### Example 4

Another blend of 20% coating grade and 80% of unoxidized Tia Juana Medium asphalt was prepared. Coating grade was prepared from Tia Juana Medium residuum. It had a softening point and viscosity as shown in the table below. 3 wt.% of a zinc neutralized sulfonated SBS radial triblock copolymer was added to this blend. In another blend 3 wt.% of the unsulfonated SBS was added. Data below indicate the necessity of having a sulfonated SBS radial triblock copolymer. Softening paints and viscosities were measured as in Example 1.

**TABLE**

| Polymer | Initial Softening Pt. °F (°C) | Viscosity 135°C | Softening Pt, | |
|---|---|---|---|---|
| | | (cP) Pa.s | Bottom (°F) °C | Top (°F) °C |
| None | 115 | (408) 0.408 | | |
| 3% SBS | 140 (60) | (2465) 2.465 | (135) 57.2 | (210) 98.9 |
| 3% ZnSulfo SBS | 158 (70) | (3355) 3.355 | (163) 72.8 | (165) 73.9 |

## Claims

1. An asphaltic composition having improved storage stability, which comprises a base-neutralized mixture of (a) an oxidized asphalt, (b) a sulfonated polymer selected from (i) sulfonated EPDM and (ii) sulfonated non-hydrogenated coplymers being styrene-butadiene linear diblock, styrene-butadiene-styrene linear triblock and styrene-butadiene-styrene radial triblock copolymers; and, optionally, (c) a flux; wherein the composition has a softening point greater than 55°C and a viscosity in the range of from 0.15 to 2.0 Pa.s (150 cP to 2000 cP) or from 3.0 to 8.0 Pa.s (3000 cP to 8000 cP), measured at 135°C.

2. The composition of claim 1, wherein the polymer is sulfonated EPDM and is present in an amount less than 4 wt.% of total composition.

3. The composition of claim 2, wherein the polymer is present in an amount of from 2 wt.% to 3 wt.% of total composition.

4. The composition of claim 1, wherein the polymer is of type (ii) and is present in an amount of from 2 wt.% to 7 wt.% of total composition.

5. The composition of claim 4, wherein the polymer is present in an amount of from 3 wt.% to 5 wt.% of total composition.

6. The composition of any preceding claim, wherein the basic neutralizing agent contains cations having a valence of from +1 to +3.

7. The composition of claim 6, wherein the basic neutralizing agent contains cations selected from Ca⁺², Zn⁺², Ba⁺², Mg⁺², and mixtures thereof.

8. The composition of claim 7, wherein the basic neutralizing agent is zinc oxide or calcium oxide.

9. The method of preparing the composition of any preceding claim wherein the oxidized asphalt, the sulfonated polymer and basic neutralizing agent are combined in situ at a temperature from above 140°C to 250°C.

10. The method of preparing the composition of any of claims 1 to 8 wherein the sulfonated polymer is first neutralized with a basic neutralizing agent and is then combined with the oxidized asphalt at a temperature from above 140°C to 250°C.

11. The method of claim 9 or claim 10, wherein the basic neutralizing agent is as defined in any of claims 6 to 8.

## Patentansprüche

1. Asphaltzusammensetzung mit verbesserter Lagerstabilität, die eine basenneutralisierte Mischung aus (a) oxidiertem Asphalt, (b) sulfoniertem Polymer ausgewählt aus (i) sulfoniertem EPDM und (ii) sulfonierten, nicht hydrierten Copolymeren, die lineare Styrol/Butadien-Diblock-, lineare Styrol/Butadien/Styrol-Triblock- und radiale Styrol/Butadien/Styrol-Triblockcopolymere sind, und gegebenenfalls (c) Flußmittel umfaßt, wobei die Zusammensetzung einen Erweichungspunkt größer als 55 °C und eine Viskosität im Bereich von 0,15 bis 2,0 Pas (150 cP bis 2000 cP) oder 3,0 bis 8,0 Pas (3000 cP bis 8000 cP), gemessen bei 135 °C, aufweist.

2. Zusammensetzung nach Anspruch 1, bei der das Polymer sulfoniertes EPDM ist und in einer Menge von weniger als 4 Gew.-%, bezogen auf die gesamte Zusammensetzung, vorhanden ist.

3. Zusammensetzung nach Anspruch 2, bei der das Polymer in einer Menge von 2 Gew.-% bis 3 Gew.-%, bezogen auf die gesamte Zusammensetzung, vorhanden ist.

4. Zusammensetzung nach Anspruch 1, bei der das Polymer vom Typ (ii) ist und in einer Menge von 2 Gew.-% bis 7 Gew.-%, bezogen auf die gesamte Zusammensetzung, vorhanden ist.

5. Zusammensetzung nach Anspruch 4, bei der das Polymer in einer Menge von 3 Gew.-% bis 5 Gew.-%, bezogen auf die gesamte Zusammensetzung, vorhanden ist.

6. Zusammensetzung nach einem der vorhergehenden Ansprüche, bei der das basische Neutralisationsmittel Kationen mit einer Wertigkeit von +1 bis +3 enthält.

7. Zusammensetzung nach Anspruch 6, bei der das basische Neutralisationsmittel Kationen ausgewählt aus Ca²⁺, Zn²⁺, Ba²⁺, Mg²⁺ und Mischungen derselben enthält.

8. Zusammensetzung nach Anspruch 7, bei der das basische Neutralisationsmittel Zinkoxid oder Calciumoxid ist.

9. Verfahren zur Herstellung der Zusammensetzung gemäß einem der vorhergehenden Ansprüche, bei dem der oxidierte Asphalt, das sulfonierte Polymer und das basische Neutralisationsmittel in situ bei einer Temperatur über 140 °C bis 250 °C kombiniert werden.

10. Verfahren zur Herstellung der Zusammensetzung gemäß einem der Ansprüche 1 bis 8, bei dem das sulfonierte Polymer zuerst mit basischem Neutralisationsmittel neutralisiert wird und dann mit dem oxidierten Asphalt bei einer Temperatur über 140 °C bis 250 °C kombiniert wird.

11. Verfahren nach Anspruch 9 oder Anspruch 10, bei dem das basische Neutralisationsmittel wie in einem der Ansprüche 6 bis 8 definiert ist.

## Revendications

1. Composition asphaltique ayant une stabilité de stockage améliorée, qui comprend un mélange, neutralisé par une base, (a) d'un asphalte oxydé, (b) d'un polymère sulfoné choisi parmi (i) un EPDM sulfoné et (ii) des copolymères sulfonés non hydrogénés qui peuvent être des copolymères à double séquence linéaire de styrène-butadiène, à triple séquence linéaire de styrène-butadiène-styrène et à triple séquence radiale styrène-butadiène-styrène; et, en variante, (c) un flux; dans laquelle la composition a un point de ramollissement supérieur à 55°C et une viscosité dans la plage de 0,15 à 2,0 Pa.s (150 à 2000 cP) ou de 3,0 à 8,0 Pa.s (3000 à 8000 cP) mesurée à 135°C.

2. Composition selon la revendication 1, dans laquelle le polymère est un EPDM sulfoné et est présent en quantité inférieure à 4% en poids de la composition totale.

3. Composition selon la revendication 2, dans laquelle le polymère est présent en quantité de 2% à 3% en poids de la composition totale.

4. Composition selon la revendication 1, dans laquelle le polymère est de type (ii) et est présent en quantité de 2% à 7% en poids de la composition totale.

5. Composition selon la revendication 4, dans laquelle le polymère est présent en quantité de 3% à 5% en poids de la composition totale.

6. Composition selon l'une quelconque des revendications précédentes, dans laquelle l'agent de neutralisation basique contient des cations ayant une valence de +1 à +3.

7. Composition selon la revendication 6, dans laquelle l'agent de neutralisation basique contient des cations choisis parmi Ca⁺², Zn⁺², Ba⁺², Mg⁺² et leurs mélanges.

8. Composition selon la revendication 7, dans laquelle l'agent de neutralisation basique est l'oxyde de zinc ou l'oxyde de calcium.

9. Procédé de préparation de la composition selon l'une quelconque des revendications précédentes, dans lequel l'asphalte oxydé, le polymère sulfoné et l'agent de neutralisation basique sont combinés in situ à une température de plus de 140°C à 250°C.

10. Procédé de préparation de la composition selon l'une quelconque des revendications 1 à 8, dans lequel le polymère sulfoné est tout d'abord neutralisé par un agent de neutralisation basique et est ensuite combiné avec l'asphalte oxydé à une température de plus de 140°C à 250°C.

11. Procédé selon la revendication 9 ou 10, dans lequel l'agent de neutralisation basique est tel que défini dans l'une quelconque des revendications 6 à 8.
